# EUROPEAN PATENT SPECIFICATION

(11) **EP 1 402 209 B1**
(45) Date of publication and mention of the grant of the patent: **02.05.2007**
(21) Application number: 02743116.2
(22) Date of filing: 28.05.2002
(51) Int. Cl.: F16K 11/078, F16K 25/00

(54) **FLOW CONTROL MEMBERS MADE OF PHENOLIC RESIN FOR HYDRAULIC EQUIPMENT UNITS**
DURCHFLUSSREGELGLIEDER AUS PHENOLHARZ FÜR HYDRAULIKEINRICHTUNGSEINHEITEN
ELEMENTS DE REGLAGE DE DEBIT EN RESINE PHENOLIQUE POUR UNITES D'EQUIPEMENT HYDRAULIQUE

(30) Priority: 08.06.2001 IT TO20010551
(43) Date of publication of application: 31.03.2004
(73) Proprietor: GEVIPI A.G., FL-9490 Vaduz (LI)
(72) Inventor: KNAPP, Alfons, 88400 Biberach/Riss (DE); KNAPP, Francesco, I-27100 Pavia (IT)
(74) Representative: Patrito, Pier Franco
(86) International application number: PCT/EP2002/005839
(87) International publication number: WO 2002/101272

(56) References cited:
- FR-A- 2 574 894
- US-A- 3 233 732
- US-A- 3 920 043
- US-A- 5 372 161
- US-A- 5 755 261

## Description

### Background of the Invention

This invention relates to plates made of hard material, intended to be used as members to control the flow in hydraulic equipment units.

Currently, in many kinds of hydraulic equipment such as faucets, mixing faucets, thermostatic faucets, sequential faucets, switch valves, distributors, flow subdividers and others, use is made of hard material plates as flow control members. These plates are made of ceramics, silicon carbide or other similar materials treated by means of sintering or similar procedures for high-temperature consolidation, after which one of their surfaces is machined with a high degree of finish, namely, it is lapped. Two plates of this type, one fixed and the other movable, placed with their lapped surfaces in mutual contact, produce optimum hydraulic sealing and are thus capable of being used as flow control members. For this purpose, the plates are made with suitable peripheral configurations and/or with properly shaped recesses or with properly shaped openings that extend through them. However, in the known embodiments, these plates made of hard material entail some problems.

Considering their production method, these plates usually are made only with relatively simple configurations; in particular, it would be difficult and costly to shape them with the relatively complex configurations that are necessary in order to cooperate directly with the specific members of a hydraulic equipment unit, such as the cage or casing of a cartridge or the guide and operating members of a cartridge or valve. Consequently, every plate made of hard material is linked to an appropriate support member or auxiliary member; particularly, for the fixed plate said support member is a bottom member having the configurations needed to receive the fixed plate and to cooperate with the cage of a cartridge and with the body of a hydraulic equipment unit containing said cartridge, and for the movable plate said support member is a slide having the configurations that are needed to hold the movable plate and to cooperate with the guide members and the control members of the cartridge or valve (in this respect see, for example, the European Patent No. 0,362,041). These support members are generally made of plastic material and can therefore be shaped without any difficulty with the configurations necessary, on the one hand, for receiving a plate made of hard material and, on the other hand, for cooperating with other components of a hydraulic equipment unit. But the need for providing similar support members and the seals that are necessary between them and the plates made of hard material entails an increase in the number of component parts of the equipment unit, along with serious difficulties and burdens for effecting an entirely instrumental assembly of the components. This leads to some problems of practical implementation, plus higher costs.

Furthermore, the presence of these support members leads to an increase in the height of a cartridge; this is always an inconvenience and, in some cases, this inconvenience becomes serious.

The passage openings for the flow, presented by the plates, are subjected to serious limitations and cannot be designed freely; for example, only with serious difficulties they can have a reduced thickness, they can be separated by a reduced thickness of material, or they can present major variations of their cross-section along the thickness of the plate, which would be useful in the fixed plates in order to connect the passage openings cooperating with the movable plate with the water intake and outlet openings.

In particular, it is difficult to make deep seats in these plates for the purpose of holding the packings, arid the packings housed in rather shallow seats can easily be expelled due to an overpressure. In order to have the packings adequately retained, spring may be added to the use of additional members retaining the packings (see, for example, the European Patent No. 0,647,807). By the same token, it is almost impossible to make in the plates made of hard material the very deep seats that are needed to hold the dynamic packings in the form of sleeves (see, for example, the United States Patent No. 5,111,842).

It would also be difficult to make configurations that involve small studs or lamellae in order to mechanically suppress the turbulence and noise resulting from a flow; such configurations are given to other components of the equipment or to specific additional components (see, for example, the Italian Patent No. 1,156,920). In this connection, it is possible, although with some difficulty, to make in the plates relatively simple configurations with steps (as according to the United States Patent No. 3,433,264), which however offer only a reduced effectiveness.

By the same token, it would be almost impossible directly to make in the hard plates certain deep seats that can accommodate and retain some capsules made of yielding material, intended to pneumatically absorb the vibrations, the rapid cyclic variations in the pressure and the noise deriving from a flow.

Furthermore, considering the method by which these plates are made, they are subjected to major deformations and to shrinkages that cannot be exactly foreseen, whereby the finished plates present a wide tolerance in the geometry and in the dimensions of their configurations. Also, considering the serious geometry tolerances, the plates could not directly cooperate in a reliable manner with other members of the hydraulic equipment that are different from the appropriate supports and, sometimes, even their insertion in the supports may cause difficulties. Furthermore, the dimensional tolerances, which are added up on top of those of the other components of the equipment, create the need for providing means to compensate for the overall tolerances of the equipment. For example, a cartridge for a faucet, equipped with these plates, cannot be fixed in its seat simply by tightening all the way a lid of the faucet because in that way, the pressure created upon contact between the plates could undergo excessive variations from one equipment unit to the other, from a value that would be insufficient to ensure a sealing, up to a value that would block reciprocal movements. It is thus often necessary to tighten the lid that holds the cartridge by using a dynamometric wrench, or by relying on the particular sensitivity of an operator. This introduces further difficulties in the instrumental assembly of a cartridge in the body of a faucet.

Furthermore, the surfaces that are not lapped, of the plates made according to the known procedures, do not present a roughness sufficiently reduced in order to cooperate by effectively sealing with damping capsules, with dynamic packings such as certain packings in the form of sleeves, or with packings applied with limited pressure, but only with effectively tightened static packings.

Furthermore, the need for subjecting the hard plates to high temperatures during their production makes it difficult or impossible to incorporate in them any solid lubricants that are capable of reducing their friction coefficient and especially the static friction (slip-stick effect).

Finally, the known method for producing hard plates is somewhat difficult and costly and leads to rapid wear and tear of the forming molds.

The document US-A-5755261 describes a plate made of hard material, having a flat surface machined by means of lapping to a high degree of finish and intended to be used as flow control member in a hydraulic equipment unit, which plate consists of a synthetic resin made by means of molding and having, in the regions different from said flat surface, configurations capable of cooperating with specific members of a hydraulic equipment unit. This document also describes the use of a phenolic resin as a start matter for preparing, by calcination, glassy carbon used as an additive to the synthetic resin.

The document US-A-3233732 describes a rotor made of phenolic resin, used as a flow control member in a water softening system.

### Summary of the Invention

An object of this invention is therefore to allow the production of plates made of hard material that would not entail the inconveniences mentioned or that would present them to a substantially reduced degree.

The invention is based on the observation that there are materials, that however have never been used before in making the plates considered, which present a hardness and structural characteristic that would make it possible to submit them to the lapping which is necessary for the hydraulic sealing, but that at the same time are suitable for being shaped by inexpensive processes, also with very complex configurations, and which during their production undergo negligible deformations and shrinkages that can be predicted with precision. These are the so-called thermosetting synthetic polymers, such as especially the phenolic, carbamidic, melaminic and similar resins.

These materials can be shaped in molds under pressure at moderate temperatures and with reduced wear and tear of the molds, hence, in an economical manner, and they undergo negligible deformations and shrinkages that can be precisely predicted, so that it is possible to use them for making members with very complex shapes, provided that they present a flat surface free from any projection, capable of being machined by means of lapping so as to constitute a sealing surface intended to cooperate with another lapped surface. The configurations of all of the other portions of these members can be designed with a great degree of freedom so as to be able to cooperate directly with any member of a hydraulic equipment unit. It is thus possible to omit the appropriate support members for plates made of hard material and the necessary additional packings; this also offers many other advantages, as will be explained below.

Therefore, the subject of this invention is a plate made of hard material having the features of claim 1.

According to a feature of the invention, the phenolic resin can be mixed with a solid lubricant capable of reducing the friction coefficient and especially the static friction without, however, causing obstacles to the lapping operation. Among the solid lubricants that are suitable for this purpose may be mentioned tetrafluoroethylene, phenanthrene, phthalocyanine, graphite, molybdenum sulfide, talc and bentonite.

According to another feature of this invention, the phenolic resin can be mixed by adding powdered materials capable of reducing the friction coefficient and especially the static friction, of reducing the wear due to abrasion, of improving the thermal conductivity as well as of supporting a possible surfacing with deposited hard materials. Among said added powdered materials may be particularly mentioned: aluminium oxide, other metal oxides, triclinic crystallographic lattice silica, powdered stainless steel, other metal powders, silicon carbide, other carbides, aluminium nitride, other metal nitrides, carbon fibers, other fibrous materials such as wollastonite (Ca Si O₃). Said materials can be added either singularly or in various combinations among them and with other additives.

Among the hard materials which may be deposited on the surface of the plates of phenolic resin may be particularly mentioned: cubic crystallographic lattice carbon, metal carbides and nitrides and other hard materials. Preferably, such materials can be physically or chemically deposited from a gaseous medium.

In particular such a plate, when it is intended for use as a fixed flow control member, presents in its regions different from said at least one flat surface the characteristic configurations of a bottom member capable of being linked directly to the cage of a cartridge and of cooperating directly with a fixed part of a hydraulic equipment unit.

On the other hand such a plate, when it is intended to be used as movable flow control member, presents in its regions different from said at least one flat surface the characteristic configurations of a slide capable of cooperating directly with guide members and with the operating members of a cartridge.

In correspondence to the lapped flat surface, the plate can have variously shaped flow guide recesses and/or through extending openings, freely designed, also having a reduced thickness and/or separated by reduced thicknesses of material. The passage openings can vary greatly in terms of cross-section along the thickness of the plate, so as to replace the connections usually made in the supports of the plates.

The configurations of the regions of the plate, different from the flat lapped surface, can comprise connecting members and/or coupling members intended to cooperate with fixed parts of the cartridge, guide surfaces and/or coupling surfaces intended to cooperate with fixed or movable parts of the cartridge, smooth but not machined surfaces suitable for cooperating with static or dynamic seals, recesses or reliefs of considerable depth suitable for accommodating inserted packings or packings directly shaped in or on the plates, and cavities having other purposes.

In correspondence both to the regions of the plate different from the flat lapped surface, and to recesses provided in the lapped flat surface, the plate can present configurations similar to lamellae or studs, constituting mechanical members for absorbing the noise coming from a flow, deep seats capable of receiving pneumatic flow noise absorption capsules and, for the fixed plates, deep seats intended to receive the insertion of positioning members.

As will be readily understood, thanks to these features or a part of them, a couple of plates according to the invention, or even a single plate according to the invention constituting a couple with a plate made of hard material according to prior technique, can be made in complex shapes with substantially simple and economical processes and can be used to constitute flow control members of a hydraulic equipment unit, suitable for cooperating directly with other members of the equipment unit, thus making it possible to entirely suppress the usual supports of the plates, to drastically simplify the structure of the equipment unit and to reduce its number of components and its dimensions. In particular, these plates can have deep seats for the purpose of retaining packings, both normal packings and dynamic packings in the form of sleeves, and/or to hold capsules made of yielding material constituting pneumatic dampers, or even for other purposes. These plates may also comprise small studs or lamellae constituting mechanical dampers. The plates are subject to practically zero deformations and to precisely predictable shrinkages, so that they can present very limited dimensional tolerances, which may render superfluous any means intended to compensate for the overall tolerances of the equipment, so that a cartridge for a hydraulic equipment unit, provided with these plates, can be fixed in its seat simply by thoroughly tightening a lid, and this radically simplifies the mounting operation thereof. By using accurately machined molds, the non-lapped surfaces of the plate made according to the invention can be caused to present surfaces having a roughness sufficiently reduced for being able to cooperate directly with dynamic packings or with packings that are applied with limited pressure. The fact that certain solid lubricants can be incorporated in the material constituting the hard material plates makes it possible to reduce their friction coefficient and especially the static friction.

The freedom in designing the plates according to the invention can also be exploited by making, with them, a couple of plates having respectively different characteristics, for example, incorporating different solid lubricants, or even only one of the plates may incorporate a solid lubricant, or it is also possible to use a plate according to the invention in cooperation with a plate made of hard material according to prior technique.

An additional advantage offered by the employment of phenolic resins in the manufacture of the plates according to the invention resides in the fact that phenolic resins offer very limited adhesion to deposits of limestone.

### Brief description of the drawings

These and other features, objects and advantages of the subject of this invention will appear more clearly from the following description of some embodiments constituting nonrestrictive examples, with reference to the attached drawings, wherein:
Figures 1 to 9 show the sections of various examples of cartridges for single-control mixing faucets using the plates according to the invention.
Figure 10 shows a view from below, illustrating the fixed plate according to Figure 5.
Figure 11 shows a view from above, illustrating the fixed plate according to Figure 7.
Figure 12 shows the section of a single-control mixing faucet comprising a cartridge made with plates according to the invention.

### Description of the preferred embodiments

The examples shown refer to cartridges for single-control mixing faucets, namely to one of the most frequent applications of the invention, but it must be understood that the invention can also be applied to cartridges used for any type of hydraulic equipment as well as to hydraulic equipment of the type not equipped with a cartridge.

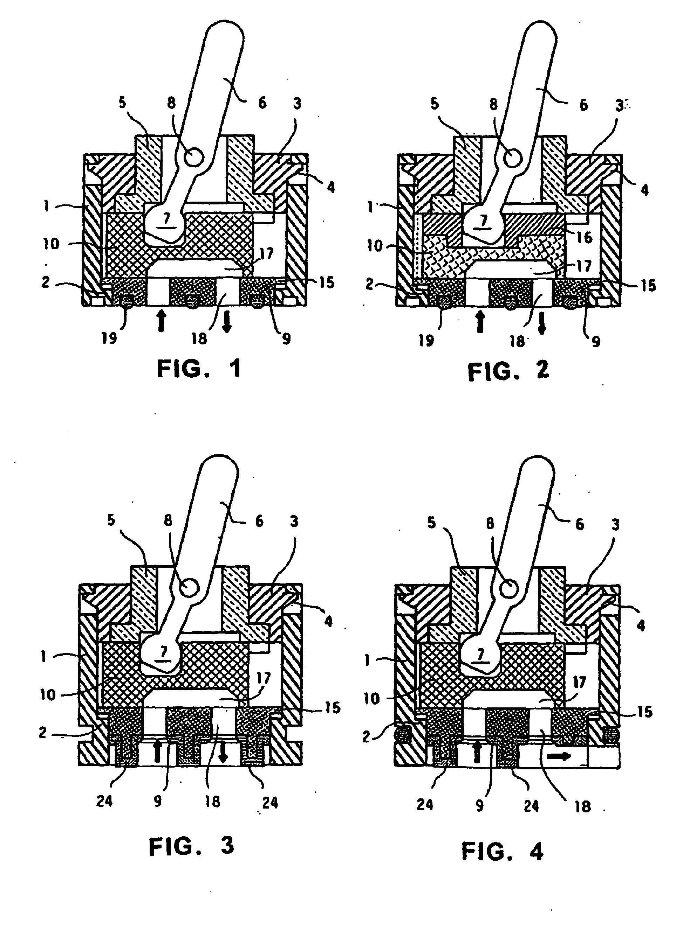

Referring to Figures 1 to 9 and 12, a cartridge for a single-control mixing faucet comprises, in the exemplary embodiments shown, a cage or casing 1 that ends below with a retaining shoulder 2, a lid 3 coupled with elastic release by means of teeth 4 to openings of cage 1, a ring member 5 rotatably seated in lid 3, an operating lever 6 with an internal control member 7, pivoted by means of an axis 8 to the rotatable ring 5, an operatively fixed plate 9 and an operatively movable plate 10. According to the invention, these plates 9 and 10, which in a well-known manner are intended to work as flow control members by means of properly shaped recesses and openings, are made by means of molding a phenolic resin and subsequently lapping the flat surfaces of the plates which, when in the mounted state, are in mutual contact.

As is well known in the state of the art, using lever 6, which can be oscillated or rotated, one can impart translation and rotation movements to the movable plate 10 with respect to the fixed plate 9 in order to control, thanks to suitable configurations in terms of recesses and openings of these plates, the flow of delivered mixed water as well as the mixing ratio between cold water and hot water.

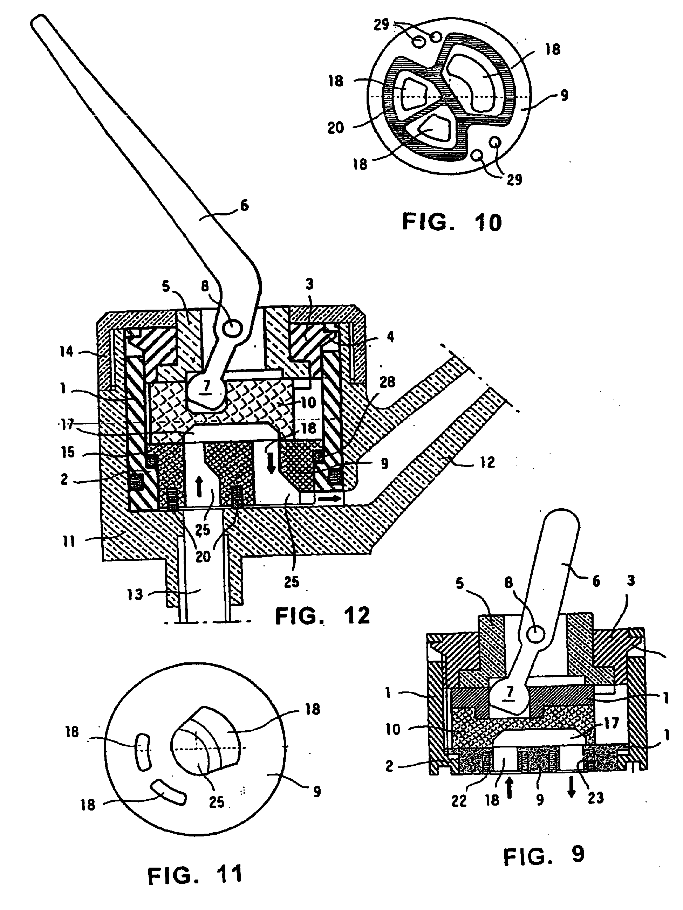

With reference to Figure 12, a cartridge of the kind shown here as an example is intended to be inserted in body 11 of a hydraulic equipment unit, which in this example is a single-control mixing faucet and, in the shape shown in Figure 12, is provided with a delivery spout 12 (while, in other cases, the delivery takes place through a pipe); body 11 of the faucet is reached by two water pipelines, respectively for cold water and hot water, only one of which, 13, is visible in Figure 12. Body 11 of the faucet is closed on top by a lid 14, which for example may be screwed and is intended to retain the cartridge in its operating position.

As it can be seen in Figures 1 to 9 and 12, the operatively fixed plate 9 has an upper protruding rim 15, intended to cooperate with the retaining shoulder 2, and it is mounted in casing 1 by simply inserting it in the casing prior to the introduction of the other components. This particularly manner of assembly, which is advantageous especially for an instrumental assembly, is made possible, on the one hand, thanks to the possibility of giving the plate according to the invention certain particular configurations, such as rim 15, and, on the other hand, thanks to the reduced shape and dimension tolerances which can be obtained for the plates and which permit the effective coupling of the fixed plate 9 with casing 1 of the cartridge. This is one of the reasons why it is possible to omit a related support member in the form of a bottom member, for the fixed plate according to the invention.

Furthermore, the fixed plate 9, as usual, presents openings 18 extending through it, that are suitably shaped and are intended to establish controlled communications between the intakes and the outlet of the waters. These parts generally are not modified by the application of the invention, except that their shapes can be chosen by the designer with a greater degree of freedom. For example, in order to regulate the flow, each passing opening 18 of the fixed plate can be made up of a plurality of narrow openings separated by thin material dividers, that could be made only with great difficulty and high costs according to the prior state of the art.

In turn, the movable plate 10, as shown in Figures 1, 3 to 8 and 12, has itself a seat that cooperates with the internal control member 7 of the operating lever 6. As an alternative, as shown in Figures 2 and 9, the movable plate 10 can be so shaped as to receive a member 16 that presents a seat which cooperates with the internal control member 7 of the operating lever 6. Member 16 serves primarily to permit the employment of the same fixed plate 10 in the presence of differently shaped control members 7. As a matter of fact, these control members can have, for example, the shapes of flat discs, as shown, or of studs. Furthermore, member 16 can advantageously have an antifriction effect. In this case, likewise the former case, the advantageous configurations described can be implemented easily, on the one hand, thanks to the possibility of giving the movable plate according to the invention certain configurations that are difficult to make in the plates according to the prior technique and, on the other hand, thanks to the reduced shape and dimension tolerances that can be obtained for the plates and that permit effective coupling of the movable plate 10 with the control member 7 of the cartridge or with member 16. This is one of the reasons why it is possible to omit a related support member in the shape of a slide for the movable plate according to the invention.

Furthermore, as usual, the movable plate 10 has a recess 17 that is appropriately profiled and is intended to establish communications between the passing openings 18 of the fixed plate 9. These parts generally are not modified by the application of the invention, except that their shapes can be chosen by the designer with a greater degree of freedom. It is also to be understood that the profiled recesses 17 of the movable plate 10 can be replaced by passing openings and/or by a particular outline of the periphery of the plate 10, according to the teachings of the known state of the art.

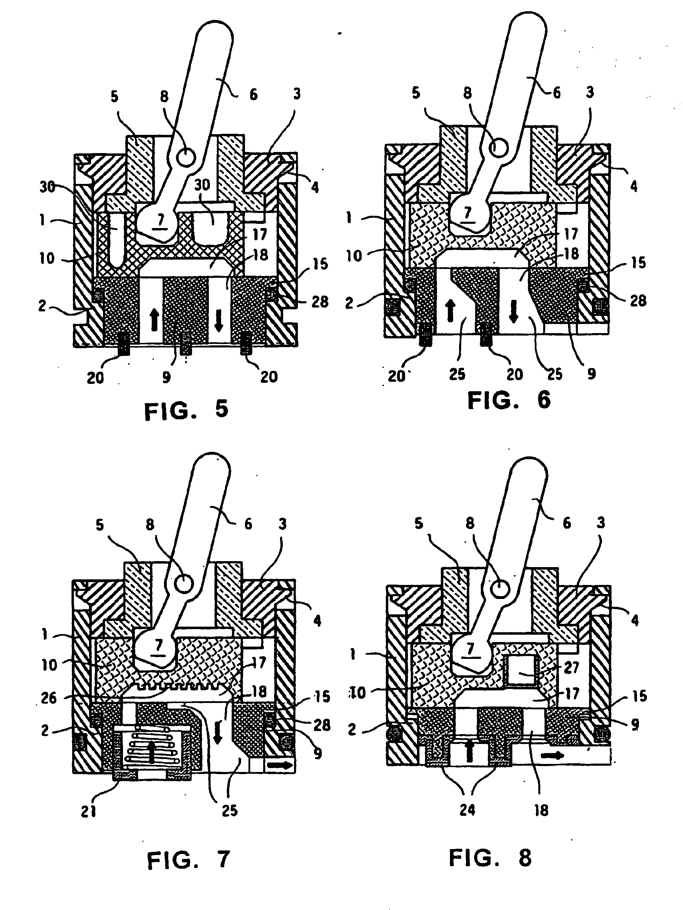

As shown in Figures 1 and 2, the fixed plate 9 can have seats that are sufficiently recessed to hold packings 19. These seats can also be very deep, as shown by Figures 5, 6 and 12, in order to retain very high packings 20, which are particularly safe against the danger of expulsion and which can also perform the function of compensating for the machining tolerances; they can have complex configuration, as shown for example in Figure 10.

The seats for packings made in the fixed plate 9 can also take on larger dimensions in order to accommodate a dynamic packing 21 in the form of a sleeve, as shown in Figure 7, or to accommodate packings 22, equipped with internal pipes 23 for purposes of rigidification, as shown in Figure 9.

As an alternative, as shown by Figures 3, 4 and 8, the fixed plate 9 can have accentuated reliefs on which can be inserted or directly molded packings 24. These packings, as shown in the mentioned figures, can extend so as to work also radially, in addition to axially, and thereby they render the employment of separate radial packings superfluous when a radial seal is necessary.

As shown in Figures 6, 7 and 12, the fixed plate 9 can furthermore have flarings 25 that may also be rather extensive, which modify the cross section of its passing openings from point to point along the thickness of the plate, in order to optimize the connection between the openings that cooperate with the movable plate and the openings for intake and outlet; a function which so far was assigned to the supporting bottom member of the fixed plate.

In turn, the movable plate 10, as shown in Figure 7, can have in its recess 17 configurations 26 like studs or lamellae, constituting a mechanical flow noise absorber; and it can also have an extended seat in order to hold a capsule 27 for the pneumatic absorption of the flow noise, as shown in Figure 8.

As shown in Figure 10, the fixed plate 9 can have one or several seats 29, intended to receive positioning studs. These seats 29 can be made in a number larger then the number really required for the positioning studs, which thus can be given differentiated positions, depending on the various practical application requirements or the different requests of the clients.

The freedom in designing the shapes of the plates according to the invention also makes it possible, where this is considered advisable, to make cavities in them that may be more or less large, such as the cavities 30 shown in Figure 5. These cavities are used in particular to localize the action of the extractors used during molding, in regions where the traces and reliefs that they generally leave on the workpiece will not cause any disturbance. Furthermore, these cavities make it possible to keep the thicknesses of the molded piece relatively uniform, thus preventing deformations due to shrinkage, constitute containment spaces for a lubricating grease, and reduce the material consumption.

Thanks to the possibility of attaining a very low degree of roughness also on the surfaces of the plates that are not machined mechanically, when it is necessary to establish a seal between the fixed plate 9 and the casing 1 of the cartridge it is possible to use packings 28 that are simply inserted, as shown in Figures 5 to 7 and 12.

Looking at the figures, it may be observed that all the component parts of a cartridge can be assembled by introducing them into the casing in the correct order from the top and ending the assembly by inserting the lid 3. It is thus very easy to mechanize the assembly of the cartridge. It will also be remarked that, by using many common component parts and by selecting only few special component parts, it is possible to make up cartridges of different types, for example, cartridges of the closed type (namely, with outlet through a pipe, as shown in Figures 1 to 3, 5 and 9), or cartridges of the open type (namely, with a lateral outlet), as shown by Figures 4, 6 to 8 and 12, as well as cartridges having special functions, as it has been described above.

Since it is possible to comply with strict tolerances and also in view of the possibility of employing packings having a great thickness, capable of compensating for these tolerances, by correctly dimensioning the component parts can be ensured the possibility of fixing the cartridge in the body of a hydraulic equipment unit (such as the one shown in Figure 12) and against its bottom by simply thoroughly tightening the lid, and therefore through an easy and safe operation that can be done by any not particularly skilled person, or can be mechanized.

The use of plates according to the invention makes it possible to reduce the number of necessary packings and, in general, the number of component parts and the height of a cartridge.

The possibility of choosing within a relatively wide field the composition of the material constituting the plates and the possible additives introduced in it makes it possible to provide plates with different characteristics, that can be adapted for various uses, and this possibility is furthermore expanded by the possibility of composing plate couples including plates having different compositions and possibly different additives, as well as of composing plate couples including a plate according to the invention and a plate made according to prior technique.

It has been said that some materials, when mixed to the phenolic resin, are intended to improve the thermal conductivity of the resulting plate. A good thermal conductivity prevents overheating in particularly heavy work conditions. Such conditions are encountered, for example, in executing some tests, wherein an overheating can alter the results of the tests by compromising the behaviour of the plates during the tests.

The plates manufactured according to the invention are particularly suitable for receiving the surfacing with hard materials, especially by means of physical or chemical deposition from a gaseous medium. This is due both to the nature of the materials forming the plates, and to the possibility of mixing to the same other materials capable of favoring the deposition and of improving the adhesion of the deposited materials.

It must be understood that the invention is not confined to the embodiments described and illustrated as examples. Several modifications have been indicated in the description and many others are within the reach of those skilled in the art. For example, while according to this description and the claims the plates are intended for a cartridge, it must be understood that the same plates can also be used in a hydraulic equipment unit that does not have a cartridge, in this case the parts of the cartridge intended to cooperate with the plates being replaced by corresponding parts of the structure of the equipment unit. These and other modifications and any substitution with technically equivalent means can be introduced in what has been described and illustrated without departing from the scope of this Patent, as defined by the appended Claims.

## Claims

1. A plate (9,10) made of hard material, having at least one flat surface free from protrusions and intended to be used as flow control member (9,10) in a hydraulic equipment unit (11), consisting of a phenolic resin made by means of molding and having, in the regions different from said at least one flat surface, configurations (15 to 25) capable of cooperating directly with specific members of the hydraulic equipment unit (11), **characterized in that** the at least one flat surface is machined by means of lapping to a high degree of finish and this machined surface is treated by deposition of at least one hard material.

2. A plate (9,10) made of hard material, according to Claim 1, **characterized in that** said phenolic resin is mixed with at least one solid lubricant capable of reducing the friction coefficient and static friction without causing obstacles to the lapping operation.

3. A plate (9.10) made of hard material, according to Claim 2, **characterized in that** said at least one solid lubricant is chosen in the group comprising tetrafluoroethylene, phenanthrene, phthalocyanine, graphite, molybdenum sulfide, talc and bentonite, added either singularly or in various combinations among them and with other additives.

4. A plate (9,10) made of hard material, according to Claim 1, **characterized in that** said phenolic resin is mixed with at least one powdered material capable of reducing the friction coefficient and especially the static friction, of reducing the wear due to abrasion, of improving the thermal conductivity and/or of supporting a surfacing with deposited hard materials.

5. A plate (9,10) made of hard material, according to Claim 4, **characterized in that** said powdered material is chosen in the group comprising: aluminium oxide, other metal oxides, triclinic crystallographic lattice silica, powdered stainless steel, other metal powders, silicon carbide, other carbides, aluminium nitride, other metal nitrides, carbon fibers, other fibrous materials such as wollastonite (Ca Si O₃), added either singularly or in various combinations among them and with other additives.

6. A plate (9,10) made of hard material, according to Claim 1, **characterized in that** said at least one deposited hard material is physically or chemically deposited from a gaseous medium.

7. A plate (9,10) made of hard material, according to Claim 1, **characterized in that** said at least one deposited hard material is chosen in the group comprising: cubic crystallographic lattice carbon, metal carbides and nitrides and other hard materials, deposited either singularly or in various combinations among them and with other additives.

8. A plate (9) made of hard material, according to Claim 1, intended for use as an operatively fixed flow control member (9), **characterized in that**, in the regions different from said at least one flat surface, it has the characteristic configurations of a bottom member (9) capable of being linked directly to the casing (1) of a cartridge and of cooperating directly with a fixed part of a hydraulic equipment unit (11).

9. A plate (10) made of hard material, according to Claim 1, intended for use as an operatively movable flow control member (10), **characterized in that**, in the regions different from said at least one flat surface, it has the characteristic configurations of a slide (10) capable of cooperating directly with guide members and with the operating members (6,7) of a cartridge.

10. A plate (10) made of hard material, according to Claim 1, intended for use as an operatively movable flow control member (10), **characterized in that**, in the regions different from said at least one flat surface, it has configurations suitable to receive a member (16) capable of cooperating directly with guide members and with the operating members (6,7) of a cartridge.

11. A plate (9,10) made of hard material, according to Claim 1, **characterized in that**, in correspondence of said flat lapped surface, it has variously shaped flow guide recesses (17) and/or freely designed passing openings (18).

12. A plate (9) made of hard material, according to Claim 1, **characterized in that** the configurations of the regions of the plate, different from said flat lapped surface, comprise connection members and/or coupling members (15) intended to cooperate with fixed parts of a cartridge.

13. A plate (9,10) made of hard material, according to Claim 1, **characterized in that** the configurations of the regions of the plate, different from said flat lapped surface, comprise guide and/or coupling members intended to cooperate with the fixed parts (1) or movable parts (7) of a cartridge.

14. A plate (9,10) made of hard material, according to Claim 1, **characterized in that** the configurations of the regions of the plate, different from said flat lapped surface, comprise smooth but not machined surfaces, suitable for cooperating with absorber capsules (27) or with static or dynamic packings (21,22).

15. A plate (9,10) made of hard material, according to Claim 1, **characterized in that** the configurations of the regions of the plate, different from said flat lapped surface, comprise recesses or reliefs of considerable depth, suitable for receiving packings (24) inserted therein or shaped directly in or on them, said packings being possibly suitable for working in various directions.

16. A plate (9) made of hard material, according to Claim 1, **characterized in that** the configurations of the regions of the plate, different from said flat lapped surface, comprise connection configurations (25) intended to optimize the passage between the intake and outlet openings of the fluids and corresponding control openings presented by the plate.

17. A plate (9,10) made of hard material, according to Claim 1, **characterized in that** the configurations of the regions of the plate, different from said flat lapped surface, comprise cavities (30) serving to localize the action of extractors, to keep the thicknesses of the molded piece relatively uniform, and to form containment spaces for a lubricating grease.

18. A plate (9,10) made of hard material, according to Claim 1, **characterized in that**, in correspondence to the regions of the plate different from said flat lapped surface and/or in recesses made in said flat lapped surface, the plate has configurations similar to lamellae (26) or studs, constituting mechanical flow noise dampers.

19. A plate (9,10) made of hard material, according to Claim 1, **characterized in that**, in correspondence to the regions of the plate different from said flat lapped surface and/or in recesses made in said flat lapped surface, the plate has deep seats suitable for receiving capsules (27) constituting pneumatic flow noise dampers.

20. A plate (9,10) made of hard material, according to Claim 1, **characterized in that**, in correspondence to the regions of the plate different from said flat lapped surface and/or in recesses made in said flat lapped surface, the plate has seats (29) intended to receive the insertion of positioning members.

21. A couple of cooperating plates (9,10) for a hydraulic equipment unit, according to Claim 1, **characterized in that** the two plates (9,10) constituting the couple contain different solid lubricants.

22. A couple of cooperating plates for a hydraulic equipment unit, **characterized in that** only one (9 or 10) of the plates constituting the couple is made according to Claim 1, while the other plate is made according to a conventional technique.

23. A hydraulic equipment unit, or a cartridge for a hydraulic equipment unit, **characterized in that** it comprises one or more flow control member plates (9,10) according to Claim 1.

## Patentansprüche

1. Platte (9,10) aus hartem Material, die wenigstens eine ebene Fläche ohne Vorsprünge aufweist und als Flusskontrollglied (9,10) bei einer Einheit (11) einer Hydraulikeinrichtung dienen soll, aus einem Phenolharz formgepresst ist und in den Bereichen, die anders als die wenigstens eine ebene Fläche sind, mit Gebilden (15-25) versehen ist, die mit besonderen Elementen der Einheit (11) der Hydraulikeinrichtung direkt in Wirkverbindung stehen, **dadurch gekennzeichnet, dass** die wenigstens eine ebene Fläche mit einem Läppverfahren auf hohe Güte fertigbearbeitet ist, und dass die bearbeitete Fläche durch Plattieren wenigstens einer Schicht aus hartem Material behandelt ist.

2. Platte (9,10) aus hartem Material nach Anspruch 1, **dadurch gekennzeichnet, dass** das Phenolharz mit einem festen Schmiermittel vermischt ist, das in der Lage ist, den Reibwert und die Anlaufreibung herabzusetzen, ohne dabei den Läppvorgang zu beeinträchtigen.

3. Platte (9,10) aus hartem Material nach Anspruch 2, **dadurch gekennzeichnet, dass** das wenigstens eine feste Schmiermittel aus der Gruppe gewählt ist, die Tetrafluoräthylen, Phenanthren, Phtalocyanine, Graphit, Molybdensulfid, Talk und Bentonit umfasst, die einzeln oder miteinander und mit anderen Zusatzstoffen kombiniert zugegeben werden.

4. Platte (9,10) aus hartem Material nach Anspruch 1, **dadurch gekennzeichnet, dass** das Phenolharz mit wenigstens einem pulverförmigen Material vermischt ist, das in der Lage, ist den Reibwert und insbesondere die Anlaufreibung herabzusetzen, den Schleifveschleiss zu vermindern, die Wärmeleitfähigkeit zu verbessern und/oder die Oberflächenbehandlung mit plattiertem hartem Material zu erleichtern.

5. Platte (9,10) aus hartem Material nach Anspruch 4, **dadurch gekennzeichnet, dass** das pulverförmige Material aus der Gruppe gewählt ist, die Aluminiumoxyd, weitere Metalloxyde, Kieselsäure mit triklinem Kristallgitter, pulverförmigen rostfreier Stahl, weitere Metallpulver, Karborundum, weitere Karbide, Aluminiumnitrid, weitere Metallnitride, Kohlefasern, weitere faserige Stoffe wie etwa Wollastonit (CaSiO₃) umfasst, die einzeln oder miteinander und mit anderen Zusatzstoffen kombiniert zugegeben werden.

6. Platte (9,10) aus hartem Material nach Anspruch 1, **dadurch gekennzeichnet, dass** das Plattieren wenigstens einer Schicht aus hartem Material physikalisch oder chemisch über ein gasförmiges Medium erfolgt.

7. Platte (9,10) aus hartem Material nach Anspruch 1, **dadurch gekennzeichnet, dass** das wenigstens eine plattierte harte Material aus der Gruppe gewählt ist, die Kohlenstoff mit kubischem Kristallgitter, Karbide und Metallnitride sowie weitere harte Stoffe umfasst, die einzeln oder miteinander und mit anderen Zusatzstoffen kombiniert plattiert werden.

8. Platte (9,10) aus hartem Material nach Anspruch 1, die dazu bestimmt ist, als ortsfestes Flusskontrollglied (9) benutzt zu werden, **dadurch gekennzeichnet, dass** sie in den Bereichen, die anders als die wenigstens eine ebene Fläche sind, das typische Gebilde einer Bodenscheibe (9) aufweist, die direkt mit dem Gehäuse (1) einer Patrone verbunden werden und mit einem ortsfesten Teil einer Einheit (11) einer Hydraulikeinrichtung direkt zusammenwirken kann.

9. Platte (9,10) nach wenigstens einem der vorhegehenden Ansprüche, die dazu bestimmt ist, als bewegliches Flusskontrollglied (10) benutzt zu werden, **dadurch gekennzeichnet, dass** sie in den Bereichen, die anders als die wenigstens eine ebene Fläche sind, das typische Gebilde eines Schiebers (10) aufweist, der mit den Führungselementen und mit den Betätigungselementen (6,7) einer Patrone direkt zusammenwirken kann.

10. Platte (9,10) nach wenigstens einem der vorhegehenden Ansprüche, die dazu bestimmt ist, als bewegliches Flusskontrollglied (10) benutzt zu werden, **dadurch gekennzeichnet, dass** sie in den Bereichen, die anders als die wenigstens eine ebene Fläche sind, die geeignete Gestaltung zur Aufnahme eines Gliedes (16) aufweist, das mit den Führungselementen und mit den Betätigungselementen (6, 7) einer Patrone direkt zusammenwirken kann.

11. Platte (9,10) nach Anspruch 1, **dadurch gekennzeichnet, dass** sie im Bereich der geläppten ebenen Fläche unterschiedlich ausgebildete Flussführungs-Aussparungen (17) und/oder frei gestaltete Durchgangsöffnungen (18) aufweist.

12. Platte (9,10) nach Anspruch 1, **dadurch gekennzeichnet, dass** die in den Bereichen der Platte, die anders als die geläppte ebene Fläche sind, vorgesehenen Gebilde Verbindungs- und/oder Kupplungselemente (15) umfassen, die dazu bestimmt sind, mit den ortsfesten Teilen einer Patrone zusammenzuwirken.

13. Platte (9,10) nach Anspruch 1, **dadurch gekennzeichnet, dass** die in den Bereichen der Platte, die anders als die geläppte ebene Fläche sind, vorgesehenen Gebilde Führungsflächen und/oder Kupplungselemente umfassen, die dazu bestimmt sind, mit ortsfesten Teilen (1) oder beweglichen Teilen (7) einer Patrone zusammenzuarbeiten.

14. Platte (9,10) nach Anspruch 1, **dadurch gekennzeichnet, dass** die in den Bereichen der Platte, die anders als die geläppte ebene Fläche sind, vorgesehenen Gebilde glatte, zwar nicht bearbeitete Flächen umfassen, die dazu geeignet sind, mit Dämpfungsdosen (27) oder mit statischen oder dynamischen Dichtungen (21,22) zusammenzuwirken.

15. Platte (9,10) nach Anspruch 1, **dadurch gekennzeichnet, dass** die in den Bereichen der Platte, die anders als die geläppte ebene Fläche sind, vorgesehenen Gebilde Aussparungen oder Erhebungen beträchtlicher Tiefe umfassen, die dazu geeignet sind, in denselben eingesetze oder direkt in oder an dieselben angeformte Dichtungen (24) aufzunehmen, wobei diese Dichtungen eventuell in der Lage sind, nach unterschiedlichen Richtungen zu wirken.

16. Platte (9,10) nach Anspruch 1, **dadurch gekennzeichnet, dass** die in den Bereichen der Platte, die anders als die geläppte ebene Fläche sind, vorgesehenen Gebilde Anschlusselemente (25) umfassen, die dazu bestimmt sind, den Durchfluss zwischen den Einlauföffnungen und den Auslauföffnungen der Medien und entsprechenden Kontrollöffnungen der Platte optimal zu gestalten.

17. Platte (9,10) nach Anspruch 1, **dadurch gekennzeichnet, dass** die in den Bereichen der Platte, die anders als die geläppte ebene Fläche sind, vorgesehenen Gebilde Hohlräume (30) umfassen, die dazu dienen, die Wirkung der Abziehvorrichtungen zu orten, die Wandstärke des Pressteils relativ gleichmässig zu halten und zur Aufnahme eines Schmierfettes geeignete Räume zu bilden.

18. Platte (9,10) nach Anspruch 1, **dadurch gekennzeichnet, dass** die Platte in den Bereichen, die anders als die geläppte ebene Fläche sind, und/oder in in der geläppten ebenen Fläche vorgesehenen Aussparungen lamellenartige Gebilde (26) oder Bolzen aufweist, die zur mechanischen Dämpfung eines Strömungsgeräusches dienen.

19. Platte (9,10) nach Anspruch 1, **dadurch gekennzeichnet, dass** die Platte in den Bereichen, die anders als die geläppte ebene Fläche sind, und/oder in in der geläppten ebenen Fläche vorgesehenen Aussparungen tiefe Ausnehmungen aufweist, die dazu geeignet sind, Dosen (27) zur pneumatischen Dämpfung eines Strömungsgeräusches aufzunehmen.

20. Platte (9,10) nach Anspruch 1, **dadurch gekennzeichnet, dass** die Platte in den Bereichen, die anders als die geläppte ebene Fläche sind, und/oder in in der geläppten ebenen Fläche vorgesehenen Aussparungen Aufnahmen (29) aufweist, in welche Positionierelemente eingesetzt werden sollen.

21. Paar in Wirkverbindung stehender Platten (9,10) für eine Einheit einer Hydraulikeinrichtung nach Anspruch 1, **dadurch gekennzeichnet, dass** die beiden, das Paar bildenden Platten (9,10) unterschiedliche feste Schmiermittel enthalten.

22. Paar in Wirkverbindung stehender Platten (9,10) für eine Einheit einer Hydraulikeinrichtung nach Anspruch 1, **dadurch gekennzeichnet, dass** nur eine (9 oder 10) der beiden, das Paar bildenden Platten nach Anspruch 1 ausgebildet ist, während die andere nach einem herkömmlichen Verfahren hergestellt ist.

23. Einheit einer Hydraulikeinrichtung oder Patrone für eine Einheit einer Hydraulikeinrichtung, **dadurch gekennzeichnet, dass** sie mit einer oder mehreren Flusskontrollplatten nach Anspruch 1 versehen sind.

## Revendications

1. Une plaque (9,10) faite de matériau dur, comportant au moins une surface plane n'ayant pas des saillies et destinée è être employée comme organe de contrôle (9,10) dans une unité d'appareil hydraulique (11), constituée par une résine phénolique, réalisée par moulage et comportant, dans les régions différentes de ladite au moins une surface plane, des configurations (15 à 25) capables de coopérer directement avec des organes spécifiques de l'unité d'appareil hydraulique (11), **caractérisée en ce que** ladite au moins une surface plane est travaillée par rodage jusqu'à un haute degré de finissage, et que cette surface travaillée est traitée par déposition d'au moins un matériau dur.

2. Une plaque (9,10) faite de matériau dur, suivant la revendication 1, **caractérisée en ce que** ladite résine phénolique est mélangée avec au moins un lubrifiant solide capable de réduire le coefficient de friction et la friction statique sans entraver l'opération de rodage.

3. Une plaque (9,10) faite de matériau dur, suivant la revendication 2, **caractérisée en ce que** ledit au moins un lubrifiant solide est choisi parmi le groupe comprenant tetrafluoroethylène, phenanthrène, phthalocyanine, graphite, sulfure de molybdène, talc et bentonite, ajoutés singulièrement ou dans des différentes combinaisons entr'eux et avec des autres additives.

4. Une plaque (9,10) faite de matériau dur, suivant la revendication 1, **caractérisée en ce que** ladite résine phénolique est mélangée avec au moins un matériau en poudre capable de réduire le coefficient de friction et particulièrement la friction statique, de réduire l'usure due à l'abrasion, d'améliorer la conductivité thermique et/ou de supporter le traitement éventuel de la surface par un matériau dur déposé.

5. Une plaque (9,10) faite de matériau dur, suivant la revendication 4, **caractérisée en ce que** ledit matériau en poudre est choisi dans le groupe comprenant l'oxyde d'aluminium, des autres oxydes de métaux, de la silice è réseau cristallographique triclinique, de l'acier inoxydable en poudre, des autres poudres de métaux, du carbure de silicium, des autres carbures, du nitrure d'aluminium, des autres nitrures de métaux, des fibres de carbone, des autres matériaux fibreux comme la wollastonite (Ca Si O₃), ajoutés singulièrement ou dans des différentes combinaisons entr'eux et avec des autres additives.

6. Une plaque (9,10) faite de matériau dur, suivant la revendication 1, **caractérisée en ce que** ledit au moins un matériau dur est déposé physiquement ou chimiquement à partir d'un moyen gazeux.

7. Une plaque (9,10) faite de matériau dur, suivant la revendication 1, **caractérisée en ce que** ledit au moins un matériau dur est choisi dans le groupe comprenant: carbone à réseau cristallographique cubique, carbures et nitrures de métaux, et autres matériaux durs, déposés singulièrement ou en des différentes combinaisons entr'eux et avec des autres additives.

8. Une plaque (9) faite de matériau dur, suivant la revendication 1, destinée à être employée comme un organe (9) de contrôle de flux opérativement fixe, **caractérisée en ce que**, dans les régions différentes de ladite au moins une surface plane, elle comporte les configurations caractéristiques d'un fond (9) capable d'être directement connecté à l'enveloppe (1) d'une cartouche et de coopérer directement avec une partie fixe d'une unité d'appareil hydraulique (11).

9. Une plaque (10) faite de matériau dur, suivant la revendication 1, destinée à être employée comme un organe (10) de contrôle du flux opérativement mobile, **caractérisée en ce que**, dans les régions différentes de ladite au moins une surface plane, elle montre les configurations caractéristiques d'un chariot (10) capable de coopérer directement avec les organes de guidage et avec les organes de commande (6,7) d'une cartouche.

10. Une plaque (10) faite de matériau dur, suivant la revendication 1, destinée à être employée comme un organe (10) de contrôle du flux opérativement mobile, **caractérisée en ce que**, dans les régions différentes de ladite au moins une surface plane, elle montre les configurations appropriées pour recevoir un organe (16) capable de coopérer directement avec les organes de guidage et avec les organes de commande (6,7) d'une cartouche.

11. Une plaque (9,10) faite de matériau dur, suivant la revendication 1, **caractérisée en ce que**, en correspondance de ladite surface plane rodée, elle comporte des cavités (17) de guidage du flux ayant des formes différentes et/ou des ouvertures de passage (18) désignées avec liberté.

12. Une plaque (9) faite de matériau dur, suivant la revendication 1, **caractérisée en ce que** les configurations des régions de la plaque, différentes de ladite surface plate rodée, comprennent des organes de connexion et/ou des organes d'accouplement (15) désignés pour coopérer avec des parties fixes d'une cartouche.

13. Une plaque (9,10) faite de matériau dur, suivant la revendication 1, **caractérisée en ce que** les configurations des régions de la plaque, différentes de ladite surface plane rodée, comprennent des organes de guidage et/ou d'accouplement désignés pour coopérer avec des parties fixes (1) ou mobiles (7) d'une cartouche.

14. Une plaque (9,10) faite de matériau dur, suivant la revendication 1, **caractérisée en ce que** les configurations des régions de la plaque, différentes de ladite surface plane rodée, comprennent des surfaces planes mais non travaillées, adaptées pour coopérer avec des capsules d'amortissement (27) ou avec des garnitures statiques ou dynamiques (21,22).

15. Une plaque (9,10) faite de matériau dur, suivant la revendication 1, **caractérisée en ce que** les configurations des régions de la plaque, différentes de ladite surface plane rodée, comprennent des cavités ou des saillies de profondeur considérable, adaptées pour recevoir des garnitures (24) y insérées ou formées directement dans elles ou sur elles, lesdites garnitures pouvant être adaptées pour travailler en des différentes directions.

16. Une plaque (9) faite de matériau dur, suivant la revendication 1, **caractérisée en ce que** les configurations des régions de la plaque, différentes de ladite surface plane rodée, comprennent des configurations de connexion (25) désignées pour optimiser le passage entre les ouvertures d'entrée et de sortie des fluides et les ouvertures de contrôle correspondantes présentées par la plaque.

17. Une plaque (9,10) faite de matériau dur, suivant la revendication 1, **caractérisée en ce que** les configurations des régions de la plaque, différentes de ladite surface plane rodée, comprennent des cavités (30) ayant le but de localiser l'action des extracteurs, de maintenir relativement uniforme l'épaisseur des pièces moulées, et de former des espaces pour contenir un gras lubrifiant.

18. Une plaque (9,10) faite de matériau dur, suivant la revendication 1, **caractérisée en ce que**, en correspondance des régions de la plaque différentes de ladite surface plane rodée et/ou dans des cavités prévues dans ladite surface plane rodée, la plaque comporte des configurations similaires de lamelles (26) ou de goujons, constituant des amortisseurs mécaniques du bruit du flux.

19. Une plaque (9,10) faite de matériau dur, suivant la revendication 1, **caractérisée en ce que**, en correspondance des régions de la plaque différentes de ladite surface plane rodée et/ou dans des cavités prévues dans ladite surface plane rodée, la plaque comporte des sièges profonds adaptés pour recevoir des capsules (27) constituant des amortisseurs pneumatiques du bruit du flux.

20. Une plaque (9,10) faite de matériau dur, suivant la revendication 1, **caractérisée en ce que**, en correspondance des régions de la plaque différentes de ladite surface plane rodée et/ou dans des cavités prévues dans ladite surface plane rodée, la plaque comporte des sièges (29) destinées à recevoir l'insertion d'organes de positionnement.

21. Un pair de plaques coopérantes (9,10) pour une unité d'appareil hydraulique, suivant la revendication 1, **caractérisé en ce que** les deux plaques (9,10) constituant le pair comportent des lubrifiants solides différents.

22. Un pair de plaques coopérantes pour une unité d'appareil hydraulique, **caractérisé en ce que** l'une seulement (9 ou 10) des plaques constituant le pair est réalisée suivant la revendication 1, tandis que l'autre plaque est réalisée suivant une technique traditionnelle.

23. Une unité d'appareil hydraulique, ou une cartouche pour une unité d'appareil hydraulique, **caractérisée en ce qu'**elle comprend une ou plusieurs plaques de contrôle du flux suivant la revendication 1.
